(19) Europäisches Patentamt
European Patent Office
Office européen des brevets

(11) EP 2 458 021 A1

(12) EUROPEAN PATENT APPLICATION
published in accordance with Art. 153(4) EPC

(43) Date of publication:
30.05.2012 Bulletin 2012/22

(51) Int Cl.:
C21B 13/10 (2006.01)    C22B 1/16 (2006.01)

(21) Application number: 10802289.8

(22) Date of filing: 21.07.2010

(86) International application number:
PCT/JP2010/062256

(87) International publication number:
WO 2011/010669 (27.01.2011 Gazette 2011/04)

(84) Designated Contracting States:
AL AT BE BG CH CY CZ DE DK EE ES FI FR GB
GR HR HU IE IS IT LI LT LU LV MC MK MT NL NO
PL PT RO SE SI SK SM TR

(30) Priority: 21.07.2009  JP 2009169718

(71) Applicant: Kabushiki Kaisha Kobe Seiko Sho
Kobe-shi, Hyogo 651-8585 (JP)

(72) Inventors:
• Sugiyama Takeshi
  Hyogo 651-8585 (JP)

• Yoshida Shohei
  Hyogo 651-8585 (JP)
• Fujita Kyoichiro
  Hyogo 651-8585 (JP)
• Misawa Ryota
  Hyogo 651-8585 (JP)

(74) Representative: Müller-Boré & Partner
Patentanwälte
Grafinger Straße 2
81671 München (DE)

(54) **APPARATUS AND METHOD FOR PRODUCING REDUCED IRON USING ALKALI-CONTAINING IRON PRODUCTION DUST AS THE RAW MATERIAL**

(57)    Provided is a movable hearth furnace for thoroughly removing alkali metal elements and producing high-strength reduced iron when producing reduced iron using iron production dust containing alkali metal elements in a movable hearth furnace. The movable hearth furnace comprises: a reduction zone for heating and reducing a carbon composite briquette (C) to produce a reduced briquette (D) having an iron metallization rate of 80% or greater; an alkali removal zone, disposed after the reduction zone, for heating the reduced briquette in a reducing atmosphere and removing the alkali metal elements from the reduced briquette to obtain an alkali-free reduced briquette; and a strengthening zone, disposed after the alkali removal zone, for heating the alkali-free reduced briquette in an oxidizing atmosphere and raising the crushing strength of the alkali-free reduced briquette to produce reduced iron product.

FIG. 2

MOVING DIRECTION

## Description

Technical Field

The present invention relates to a technique of producing reduced iron from ironmaking dust, in particular, to a technique of producing reduced iron by reducing carbon composite agglomerates at least containing ironmaking dust containing an alkali metal element with a moving hearth furnace.

Background Art

In integrated steelworks, dust having a high content of iron oxide is generated in a blast furnace, a converter, a rolling step, and the like. Of the dust, blast-furnace dust and converter dust are recycled by being added to the raw material of sintered ore; and rolling sludge, which has a high iron grade, is used as a desiliconizing agent for a blast furnace, a cooling material for a converter, and the like.

However, when blast-furnace dust and converter dust are recycled in steelworks, unnecessary metals separated from iron such as zinc, lead, and alkali metals are accumulated in the steelworks, resulting in a considerable decrease in the production efficiency of ironmaking processes. In particular, when blast-furnace dust and converter dust are recycled by being added to the raw material of sintered ore, unnecessary metals are accumulated in a blast furnace through sintered ore, which causes, for example, generation of accretions on the furnace wall. Thus, the productivity of the blast furnace is degraded.

Electric-furnace steel producers charge collected dust in the form of agglomerates into electric furnaces. Such dust contains iron in the form of iron oxide and hence needs to be reduced in electric furnaces. Thus, for example, carbonaceous material serving as a reductant needs to be charged into electric furnaces, causing decrease of productivity. In addition, as in the case of integrated steelworks, unnecessary metals are circulated and concentrated, which causes, for example, generation of accretions adhering to exhaust-gas treatment systems. Thus, the productivity of electric furnaces is degraded.

Accordingly, integrated steelworks and electric-furnace steel producers have demanded removal of unnecessary metals from ironmaking dust.

As a process of removing unnecessary metals from ironmaking dust and producing reduced iron, there has been a rotary-kiln method. However, reduced iron produced by this method has a low metallization ratio. In addition, for example, accretions on the inner wall of the kiln are generated and hence high productivity is not necessarily maintained in the method.

The applicant developed methods employing a rotary hearth furnace that serve as processes replacing the rotary-kiln method. Utilization of ironmaking dust containing zinc has already been put into practical use (for example, refer to Patent Literatures 1 to 3).

In the case of using ironmaking dust containing alkali metal elements such as Na and K at high concentrations, the technique of agglomerating such dust as a raw material for a rotary hearth furnace has already been completed (refer to Patent Literature 4). As for a reduction technique in a rotary hearth furnace, however, operation conditions under which reduced iron satisfying a specification can be produced have not been found, because reduction under operation conditions similar to those for ironmaking dust containing zinc results in insufficient removal of alkali metal elements or insufficient strength of the resultant reduced iron.

As an indicator for evaluating the strength of reduced iron usable as a raw material for a blast furnace, a converter, an electric furnace, or the like, crushing strength is generally used. In the case of a raw material for a blast furnace, as a crushing strength necessary for bearing handling from discharging from a rotary hearth furnace to charging into a blast furnace and the load pressure of charged materials in the blast furnace, 100 kgf/briquette (about 980 N/briquette) or more is demanded. In the case of a material for a converter or an electric furnace, since it is not necessary to consider load pressure in such a furnace, a crushing strength smaller than that in the case of a material for a blast furnace will suffice. However, in view of using reduced iron in general-purpose applications, the establishment of a technique that achieves a crushing strength of 100 kgf/briquette (about 980 N/briquette) or more has been demanded.

Citation List

Patent Literature

PTL 1: Japanese Unexamined Patent Application Publication No. 2003-293019
PTL 2: Japanese Unexamined Patent Application Publication No. 2003-293020

PTL 3: Japanese Unexamined Patent Application Publication No. 2009-52141
PTL 4: Japanese Unexamined Patent Application Publication No. 2003-129142

Summary of Invention

Technical Problem

Accordingly, an object of the present invention is to provide, in the production of reduced iron from ironmaking dust containing alkali metal elements (hereafter, referred to as "alkali-containing ironmaking dust") with a moving hearth furnace such as a rotary hearth furnace, an apparatus and a method for producing high-strength reduced iron from which the alkali metal elements have been sufficiently removed.

Solution to Problem

To achieve the object, the inventors of the present invention first performed the following laboratory tests for the purpose of revealing the reduction behavior of carbon composite agglomerates containing alkali-containing ironmaking dust.

(Reduction tests of carbon composite agglomerates containing alkali-containing ironmaking dust)

A blend material obtained by mixing an alkali-containing ironmaking dust such as electric-furnace dust and several carbon-containing ironmaking dusts such as blast-furnace dust was formed into carbon composite briquettes having the shape of a pillow and a volume of 6 to 7 $cm^3$ with a twin-roll briquetting machine. The briquettes were dried with a dryer so as to have a water content of 1 mass% or less. The chemical composition of the dried briquettes (hereafter, referred to as "dry briquettes") is shown in Table 1. In the table, "T. C" represents the total carbon content; "T. Fe" represents the total iron content; "M. Fe" represents a metallic-iron content; "T. Fe" includes $Fe_2O_3$, FeO, and "M. Fe"; Na, K, and Pb are not present in the form of atoms, but are present in the form of oxides and the like.

[Table 1]

| Table 1 | | | | | | | | (Unit: mass%) |
|---|---|---|---|---|---|---|---|---|
| | T.C | T.Fe | $Fe_2O_3$ | FeO | M. Fe | ZnO | Na | K | Pb |
| Dry briquettes | 13.77 | 48.84 | 24.41 | 40.48 | 1.97 | 2.62 | 0.54 | 0.13 | 0.16 |

About 44 g of the dry briquettes were placed on an alumina tray, inserted into a horizontal heating furnace heated at 1300°C, held for a predetermined period, subsequently cooled to room temperature in $N_2$ gas atmosphere, and taken out from the furnace. The reduced briquettes were subjected to the measurement of crushing strength and chemical analysis. Note that the reduction tests were performed in which, in the reduction by heating, two gases of $N_2$ (100% by volume) and $CO_2/N_2$ (30%/70% by volume) were each passed at a flow rate of 3 NL/min. Since a predetermined amount of CO-containing gas is generated from briquettes during the reduction by heating, the reduction test in which $N_2$ (100%) gas was passed to provide a reducing gas atmosphere around the briquettes simulates reduction conditions in a reducing atmosphere in an actual rotary hearth furnace; and the reduction test in which $CO_2/N_2$ (30%/70%) gas was passed to provide an oxidizing gas atmosphere around the briquettes simulates reduction conditions in an oxidizing atmosphere in an actual rotary hearth furnace.

(Results of reduction tests)

[Reduction behavior of alkali metals]

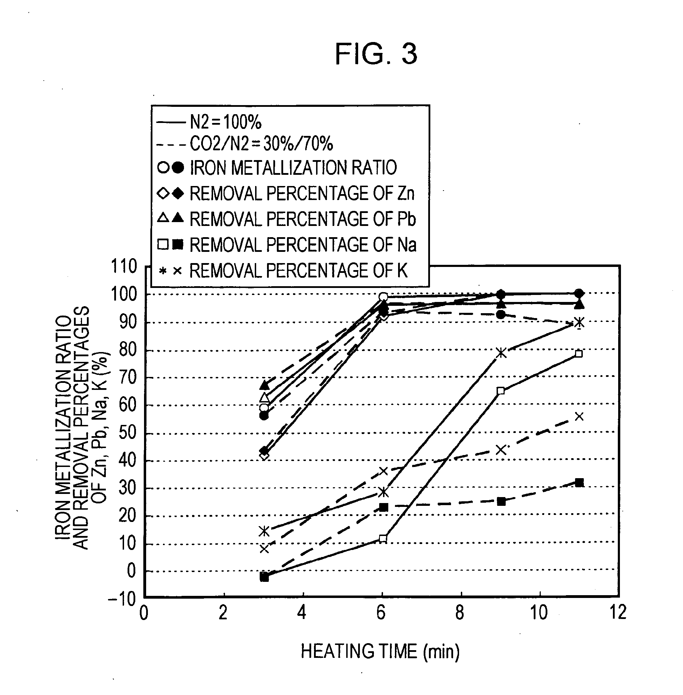

First, to understand reduction behavior of alkali metal elements in the briquettes, the metallization ratio of iron in the briquettes and the percentages of nonferrous metal elements (that is, Zn, Pb, Na, and K) removed from the briquettes were calculated from the results of the chemical analysis before and after the reduction tests; and variations in such values with heating time are illustrated in Fig. 3.

Fig. 3 shows that the iron metallization ratio reaches 90% or more at the heating time of 6 min in both of the reducing atmosphere ($N_2 = 100\%$) and the oxidizing atmosphere ($CO_2/N_2 = 30\%/70\%$); after that, the ratio slightly increases in the reducing atmosphere ($N_2 = 100\%$) and the ratio tends to slightly decrease in the oxidizing atmosphere ($CO_2/N_2 = 30\%/70\%$).

The removal percentages of Zn and Pb also reach 90% or more at the heating time of 6 min regardless of whether the atmosphere is the reducing atmosphere or the oxidizing atmosphere.

In contrast, the removal percentages of Na and K do not reach even 40% at the heating time of 6 min in both of the atmospheres; after that, the removal percentages gradually increase but do not reach even 60% at the heating time of 11 min in the oxidizing atmosphere ($CO_2/N_2$ = 30%/70%), whereas the removal percentages rapidly increase and reach about 80% at the heating time of 11 min in the reducing atmosphere ($N_2$ = 100%).

From the above-described test results, the mechanism of reducing alkali metal elements in carbon composite briquettes containing alkali-containing ironmaking dust can be considered as follows.

In alkali-containing ironmaking dust, alkali metal elements such as Na and K are present in the form of chlorides, sulfides, oxides (alone or bonded to another oxide such as iron oxide), and the like. Of these, the chlorides and the sulfides are gasified (vaporized) at a temperature of 1300°C or less and removed from briquettes. However, oxides of alkali metal elements such as $Na_2O$ and $K_2O$ are not gasified in the form of oxides; Na and K have a higher affinity for oxygen than iron (Fe); hence, oxides of alkali metal elements such as $Na_2O$ and $K_2O$ are less likely to be reduced than iron oxide (FeO). In summary, when briquettes are heated, while iron oxide is reduced (metallized), chlorides and sulfides of alkali metal elements are gasified and removed from the briquettes. However, while iron oxide (FeO) is present, iron oxide (FeO) is predominantly reduced and reduction of oxides of alkali metal elements such as $Na_2O$ and $K_2O$ does not substantially proceed. After reduction (metallization) of iron oxide has substantially been completed and iron oxide (FeO) substantially has become no longer present, reduction (metallization) of alkali metals proceeds. The thus-metallized alkali metals (Na and K) are gasified (vaporized) at a temperature of 1200°C or less and are readily removed from briquettes. Since oxides of alkali metal elements are less likely to be reduced than iron oxide, even after reduction of iron oxide has substantially been completed, the atmosphere around briquettes needs to be maintained to be a reducing atmosphere so as to make the reduction of the oxides of alkali metal elements proceed rapidly.

[Strength appearance behavior of reduced iron]

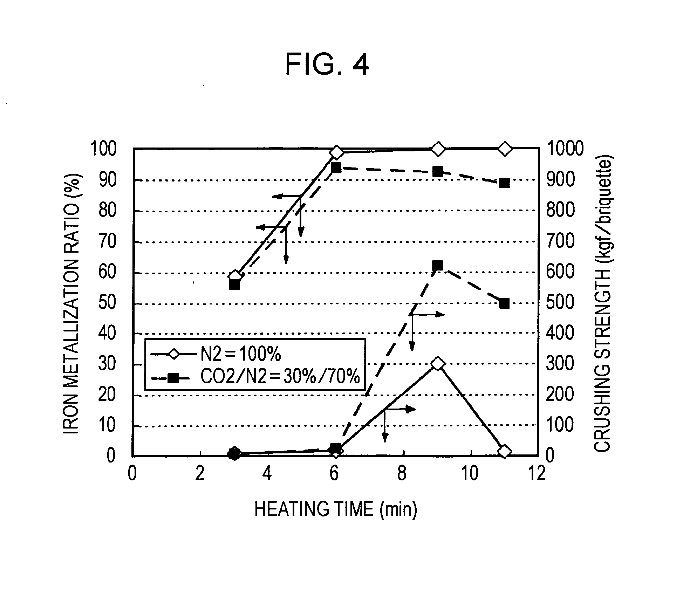

Next, to understand the strength appearance behavior of reduced iron, variations in the iron metallization ratio and crushing strength of briquettes with heating time are illustrated in Fig. 4. As for the iron metallization ratio, the same data as in Fig. 3 is plotted in Fig. 4.

Fig. 4 shows that, at the heating time of 6 min, the iron metallization ratio reaches 90% or more and iron metallization has substantially been completed, whereas the crushing strength of briquettes remains at a very low value of about 20 kgf/briquette (about 196 N/briquette) in both of the reducing atmosphere ($N_2$ = 100%) and the oxidizing atmosphere ($CO_2/N_2$ = 30%/70%).

The heating is continued even after iron metallization has substantially been completed. At the heating time of 9 min, the crushing strength considerably increases in both of the atmospheres: the crushing strength is about 300 kgf/briquette (about 2940 N/briquette) in the reducing atmosphere ($N_2$ = 100%), whereas the crushing strength is more than 600 kgf/briquette (about 5880 N/briquette) in the oxidizing atmosphere ($CO_2/N_2$ = 30%/70%) and the increase in the crushing strength is large. The heating is further continued and, at the heating time of 11 min, the crushing strength substantially becomes zero in the reducing atmosphere ($N_2$ = 100%), whereas the crushing strength tends to decrease but still remains at a high value of about 500 kgf/briquette (4900 N/briquette) in the oxidizing atmosphere ($CO_2/N_2$ = 30%/70%).

To consider the mechanism that causes the above-described variations in the crushing strength, sectional metallurgical structures of briquettes heated for predetermined times in the reduction tests were observed with a microscope.

As a result, as for samples at the heating time of 6 min, fine metallic iron grains are generated in both of the atmospheres; almost no bonds between metallic iron grains are observed in the reducing atmosphere ($N_2$ = 100%) and bonds between metallic iron grains are only partially observed in the oxidizing atmosphere ($CO_2/N_2$ = 30%/70%) (not shown).

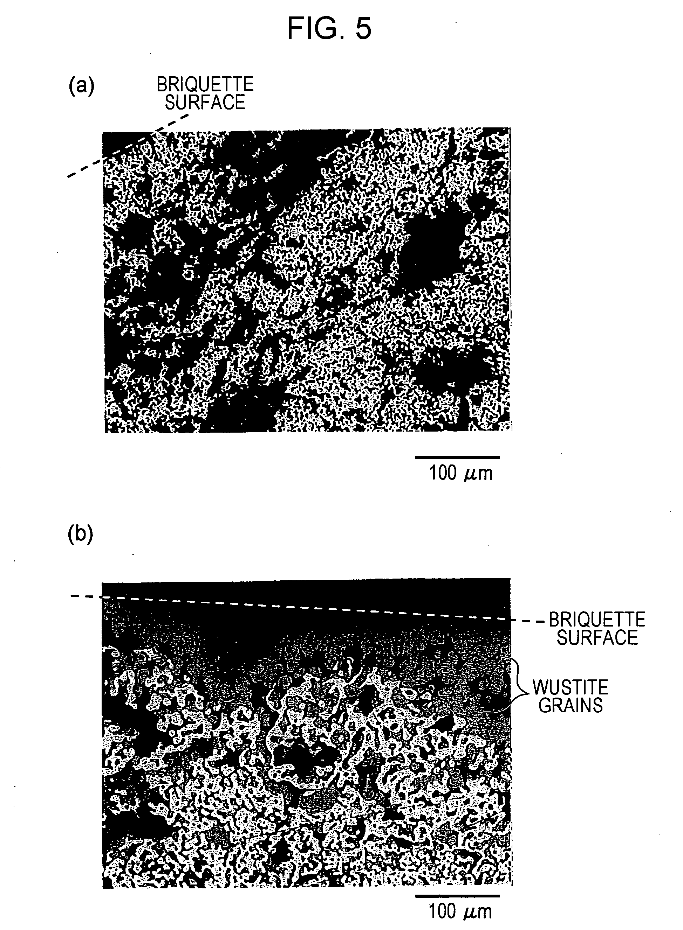

In contrast, as for samples at the heating time of 9 min, more bonds between metallic iron grains are observed in both of the atmospheres than in the samples at the heating time of 6 min; in particular, in the oxidizing atmosphere ($CO_2/N_2$ = 30%/70%), molten wustite grains (gray) are present in the near-surface region of the briquette and the thickness of bonded metallic iron (white) becomes large (refer to Fig. 5).

As for samples at the heating time of 12 min, the central portion of a briquette becomes hollow.

The following is considered to be true from the observation results. By continuing heating in the oxidizing atmosphere after iron metallization has substantially been completed, metallic iron in the near-surface regions of briquettes is reoxidized to form wustite (FeO) having a low melting point; the wustite is melted to accelerate diffusion of metallic iron; as a result, bonding between metallic iron grains (sintering) is promoted and bonding portions of metallic iron become thick.

The decrease in the crushing strength at the heating time of 11 min is probably caused by the following mechanism. In the reducing atmosphere, while the shells formed by bonds between metallic iron in the near-surface regions of briquettes are maintained, carburizing from remaining carbon to fine metallic iron grains proceeds at the inner portion; the melting point of metallic iron decreases and metallic iron grains are melted and condensed to be integrated into large metallic iron grains; thus, large cavities are formed.

The study results of the [Reduction behavior of alkali metals] and the [Strength appearance behavior of reduced iron] show that simple heating for a period necessary for metallizing iron as in existing techniques results in insufficient removal of alkali metal elements and insufficient strength of reduced iron.

On the basis of the study results, the inventors have found that, by continuing heating in a reducing atmosphere after iron has been substantially metallized, alkali metals can be removed; and, by subsequently continuing heating in an oxidizing atmosphere, the strength of reduced iron can be increased. Thus, the inventors have accomplished the following inventions.

An invention according to Claim 1 is an apparatus for producing reduced iron by reducing carbon composite agglomerates at least containing ironmaking dust containing an alkali metal element through heating with a moving hearth furnace, wherein the moving hearth furnace includes a reduction zone configured to reduce the carbon composite agglomerates through heating to form reduced agglomerates having an iron metallization ratio of 80% or more, an alkali-removal zone that is provided downstream of the reduction zone and configured to heat the reduced agglomerates in a reducing atmosphere so that the alkali metal element is removed from the reduced agglomerates to form alkali-removed reduced agglomerates, and a strength-development zone that is provided downstream of the alkali-removal zone and configured to heat the alkali-removed reduced agglomerates in an oxidizing atmosphere to increase a crushing strength of the alkali-removed reduced agglomerates to form a reduced iron product.

An invention according to Claim 2 is the apparatus for producing reduced iron according to Claim 1, wherein the reducing atmosphere of the alkali-removal zone has a gas oxidation degree OD of less than 1.0 and the oxidizing atmosphere of the strength-development zone has a gas oxidation degree OD of 1.0 or more, and

$$OD = (CO_2 + H_2O + 2O_2)/(CO_2 + H_2O + O_2 + CO + H_2)$$

[where a unit of $CO_2$, $H_2O$, $O_2$, $CO$, and $H_2$ is vol%].

An invention according to Claim 3 is the apparatus for producing reduced iron according to Claim 1 or 2, wherein a ratio of lengths of the reduction zone, the alkali-removal zone, and the strength-development zone is 1:[0.1 to 0.5]: [0.1 to 0.5].

An invention according to Claim 4 is a method for producing reduced iron, using the apparatus for producing reduced iron according to any one of Claims 1 to 3 to produce a reduced iron product from carbon composite agglomerates at least containing ironmaking dust containing an alkali metal element.

An invention according to Claim 5 is the method for producing reduced iron according to Claim 4, wherein, in the carbon composite agglomerates, a total content of $SiO_2$, $Al_2O_3$, $CaO$, and $MgO$ is 7 to 15 mass%, a MgO content is 0.1 to 6 mass%, a mass ratio of $Al_2O_3/SiO_2$ is 0.34 to 0.52, and a mass ratio of $CaO/SiO_2$ is 0.25 to 2.0; and a C content of the carbon composite agglomerates is adjusted such that 1 to 9 mass% of C remains in the reduced iron product obtained by reducing the carbon composite agglomerates.

An invention according to Claim 6 is the method for producing reduced iron according to Claim 4 or 5, wherein the carbon composite agglomerates have a porosity of 37.5% or less.

An invention according to Claim 7 is the method for producing reduced iron according to any one of Claims 4 to 6, wherein an average grain size d50 of a carbonaceous material in the carbon composite agglomerates measured by a laser diffraction scattering grain size distribution measurement method is 30 $\mu$m or less.

Advantageous Effects of Invention

According to the present invention, by continuing heating in a reducing atmosphere after reduction of iron oxide in carbon composite agglomerates has substantially been completed, alkali metal elements, which are less likely to be reduced than Fe, are removed by reduction and vaporization; and, by subsequently continuing heating in an oxidizing atmosphere, the crushing strength of reduced iron is increased to thereby produce with certainty high-strength reduced iron from which the alkali metal elements have been sufficiently removed.

Brief Description of Drawings

[Fig. 1] Fig. 1 illustrates a schematic flow of an apparatus for producing reduced iron according to an embodiment of the present invention.

[Fig. 2] Fig. 2 is a sectional view illustrating the schematic structure of a rotary hearth furnace according to an embodiment of the present invention, the schematic structure being developed in the direction in which the hearth is rotated.

[Fig. 3] Fig. 3 is a graph illustrating the relationship between heating time and an iron metallization ratio and the removal percentages of nonferrous metal elements in heating reduction tests of carbon composite briquettes containing alkali-containing ironmaking dust.

[Fig. 4] Fig. 4 is a graph illustrating the relationship between heating time and an iron metallization ratio and crushing strength in heating reduction tests of carbon composite briquettes containing alkali-containing ironmaking dust.

[Fig. 5] Fig. 5(a) is a sectional view illustrating a metallurgical structure of a carbon composite briquette at the heating time of 9 min in a reducing atmosphere ($N_2$ = 100%) and Fig. 5(b) is a sectional view illustrating a structure of a carbon composite briquette at the heating time of 9 min in an oxidizing atmosphere ($CO_2/N_2$ = 30%/70%).

[Fig. 6] Fig. 6 is a graph illustrating the influence of the slag component composition of carbon composite briquettes on the crushing strength of reduced iron.

[Fig. 7] Fig. 7 illustrates a $FeO\text{-}CaO\text{-}Al_2O_3\text{-}SiO_2$ phase diagram for explaining the relationship between the slag component of carbon composite briquettes and the liquidus temperature.

[Fig. 8] Fig. 8 illustrates a $MgO\text{-}CaO\text{-}Al_2O_3\text{-}SiO_2$ phase diagram for explaining the relationship between the slag component of carbon composite briquettes and the liquidus temperature.

[Fig. 9] Fig. 9 is a graph illustrating the relationship between the C content of reduced iron and the crushing strength of reduced iron.

[Fig. 10] Fig. 10 is a graph illustrating the relationship between the porosity of carbon composite briquettes and the crushing strength of reduced iron.

[Fig. 11] Fig. 11 is a graph illustrating the grain size distribution of blast-furnace wet dust.

[Fig. 12] Fig. 12 illustrates blast-furnace wet dust observed with an electron microscope.

Description of Embodiments

Hereinafter, the present invention will be described further in detail with reference to the drawings.

(Embodiment 1)

[Configuration of apparatus for producing reduced iron]

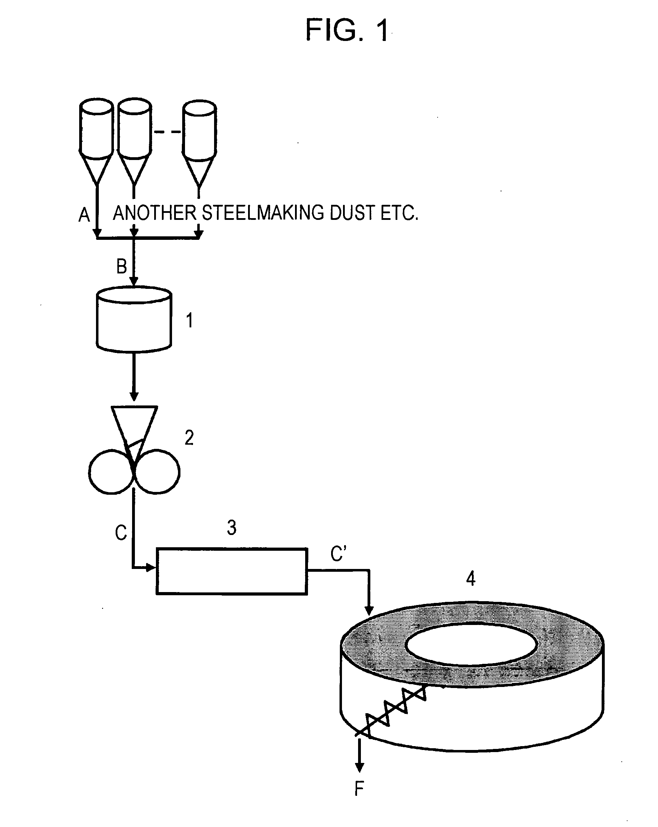

Fig. 1 illustrates a schematic flow of an apparatus for producing reduced iron according to an embodiment of the present invention. As ironmaking dust (alkali-containing ironmaking dust) A containing alkali metal elements (Na, K, and the like), converter dust, electric-furnace dust, or the like may be used alone or in combination of two or more thereof. The alkali-containing ironmaking dust A may be mixed with one or more other ironmaking dusts such as blast-furnace dust, sinter dust, mill sludge, and pickling sludge. If necessary, iron ore powder, mill scale, or the like may be added as an iron-oxide source. As a carbonaceous material serving as a reductant, for example, a carbon component in blast-furnace dust may be used; additionally or alternatively, coal, coke powder, petroleum coke, char, charcoal, pitch, or the like may be appropriately added.

The thus-prepared blend material B is charged into a mixer 1 such as a publicly known drum mixer and mixed optionally with a binder and water. Subsequently, carbon composite briquettes (hereafter, sometimes simply referred to as "briquettes") C that are carbon composite agglomerates are formed with, for example, a twin-roll briquetting machine 2.

The thus-formed briquettes C are dried with a dryer 3 so as to have a water content of 1 mass% or less.

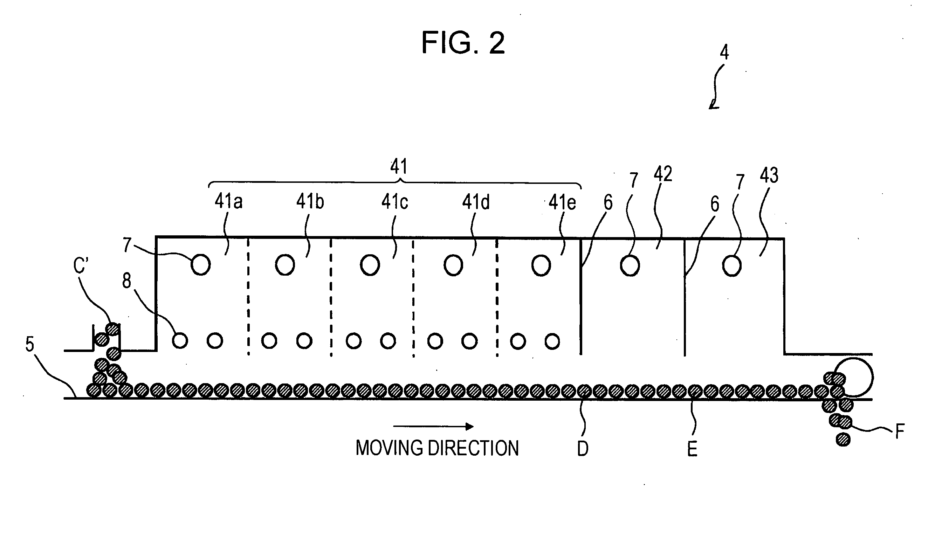

The dried briquettes C' are then placed on a hearth 5 (refer to Fig. 2) of a rotary hearth furnace 4 that is a moving hearth furnace and passed through the furnace. Hereafter, the briquettes C' charged into the furnace are referred to as "charged briquettes".

As illustrated in Fig. 2, the rotary hearth furnace 4 includes three zones, namely, a reduction zone 41, an alkali-removal zone 42, and a strength-development zone 43 arranged in this order from the entry side of the furnace. The zones are separated from each other with partition walls 6 extending downward from the furnace ceiling.

The reduction zone 41 is divided into a plurality of (in this example, five) subzones 41a to 41e. Each subzone preferably includes a primary burner 7 at an upper position of the furnace and secondary combustion burners 8 at positions lower than the primary burner 7 and higher than the hearth 5 for burning CO-containing gas generated from the charged briquettes C' such that the atmospheres of the subzones can be individually adjusted in terms of temperature and gas oxidation degree (for example, refer to Japanese Unexamined Patent Application Publication No. 2004-256868).

In the alkali-removal zone 42 and the strength-development zone 43, the primary burners 7 are disposed at upper positions of the furnace, but the secondary combustion burners 8 are not necessary because reduction of iron oxide has substantially been completed and the amount of CO-containing gas generated from the charged briquettes C' is small.

[Method for producing reduced iron]

[Reduction zone]

The charged briquettes C' are first passed through the reduction zone 41 in which the atmosphere temperature is adjusted to, for example, a maximum temperature of 1250°C to 1350°C (although a temperature as high as possible is selected from a range in which reduced briquettes D, which are reduced agglomerates, do not soften or melt, the temperature varies in accordance with, for example, the slag component composition of the charged briquettes C'). At this time, the charged briquettes C' are heated so that iron oxide is reduced with a carbonaceous material in the charged briquettes C' and metallized. Thus, the charged briquettes C' are turned into the reduced briquettes D, which are reduced agglomerates. The atmosphere temperature and gas oxidation degree in the reduction zone 41 and the residence time of the charged briquettes C' in the reduction zone 41 are adjusted so that the reduced briquettes D have an iron metallization ratio of 80% or more, preferably 85% or more, more preferably 90% or more.

Herein, the atmosphere temperature means the upper-surface temperature of the charged briquettes C'. Specifically, the atmosphere temperature may be measured in the following manner: the upper-surface temperature of the charged briquettes C' is directly measured with a radiation thermometer; or the upper-surface temperature of the charged briquettes C' is estimated by extrapolation of values measured with a plurality of thermocouples disposed in the height direction of the furnace.

The gas oxidation degree of an atmosphere is calculated from a gas composition immediately above (within 20 mm from) the charged briquettes C' (refer to, for example, Claim 4 of Japanese Unexamined Patent Application Publication No. 11-217615). Specifically, the gas composition may be measured in the following manner: the gas immediately above the charged briquettes C' is directly sampled and analyzed; or the correlation between such a gas-analysis value and, for example, the air-fuel ratio of the primary burner 7 and the rate of oxygen-containing gas blown from the secondary combustion burners 8 is examined in advance, and the gas composition immediately above the charged briquettes C' is estimated on the basis of, for example, the air-fuel ratio of the primary burner 7 and the rate of oxygen-containing gas blown from the secondary combustion burners 8.

The atmosphere temperature and gas oxidation degree in the reduction zone 41 can be adjusted by changing, for example, the air-fuel ratios of the primary burners 7 and the rates of oxygen-containing gas (preheated air, oxygen-enriched air, or the like) blown from the secondary combustion burners 8. The residence time of the charged briquettes C' in the reduction zone 41 can be adjusted by changing the moving speed of the hearth.

Note that the definitions and specific measurement methods of the atmosphere temperature and gas oxidation degree are similarly applied to the alkali-removal zone and the strength-development zone described below.

The reduced briquettes D are made to have an iron metallization ratio of 80% or more (preferably 85% or more, more preferably 90% or more) by the following reason.

In an actual rotary hearth furnace, it is unavoidable that, for example, the atmosphere temperature and gas oxidation degree have distributions in the furnace width direction in the reduction zone 41, and the degree to which the charged briquettes C' overlap one another varies in the width direction of the hearth 5 in the placement of the charged briquettes C' on the hearth 5. As a result, the reduced briquettes D have various metallization ratios.

Thus, even when heating reduction is performed at an atmosphere temperature and with a residence time that are similar to those in a laboratory test, the average iron metallization ratio of the reduced briquettes D obtained in mass production with an actual furnace is lower than the iron metallization ratio (90% or more) achieved in the laboratory test by about several percent to less than 20%.

Accordingly, when the average iron metallization ratio of the reduced briquettes D obtained in mass production with an actual rotary hearth furnace is made 80% or more, some of the reduced briquettes D have an iron metallization ratio of 90% or more. In these reduced briquettes D, reduction of alkali metal oxides immediately initiates in the subsequent alkali-removal zone 42 and alkali metal elements are gasified and removed. On the other hand, the other reduced briquettes D have an iron metallization ratio of less than 90%. By continuously heating these reduced briquettes D in a reducing atmosphere in the subsequent alkali-removal zone 42, reduction of iron oxide remaining in the reduced briquettes D first proceeds; as a result, when the iron metallization ratio has reached 90% or more, reduction of alkali metal oxides initiates and alkali metal elements are gasified and removed.

The higher the average iron metallization ratio of the reduced briquettes D obtained in mass production, the sooner the removal reaction of alkali metal elements initiates in the subsequent alkali-removal zone 42 and the residence time of the reduced briquettes D in the alkali-removal zone 42 shortens. However, this requires an increase in the residence time of the charged briquettes C' in the reduction zone 41. Accordingly, the iron metallization ratio of the reduced briquettes D is made 80% or more such that the total of the residence times in the zones 41 and 42 should be minimized.

[Alkali-removal zone]

The reduced briquettes D in which iron metallization has substantially been completed by passing through the reduction zone 41 as described above are transported with the movement of the hearth 5 to the alkali-removal zone 42 and continuously heated in a reducing atmosphere.

As the atmosphere temperature, a temperature at which reduction of alkali metal oxides proceeds and the reduced briquettes D do not soften or melt (in this example, 1250°C to 1350°C, which is the same as the maximum temperature of the reduction zone 41) should be selected.

The atmosphere is made to be a reducing atmosphere for promoting reduction of alkali metal oxides. The atmosphere is made to have a gas oxidation degree OD of less than 1.0, preferably 0.95 or less, more preferably 0.9 or less. Herein, the gas oxidation degree OD is defined as follows: $OD = (CO_2 + H_2O + 2O_2)/(CO_2 + H_2O + O_2 + CO + H_2)$ [where the unit of $CO_2$, $H_2O$, $O_2$, $CO$, and $H_2$ is vol%] because, when the atmosphere contains the $O_2$ component, the $O_2$ component has an oxidizing capability for metal elements that is twice that of the $CO_2$ component and the $H_2O$ component (for example, reaction formulae $Fe + CO_2 = FeO + CO$, $Fe + H_2O = FeO + H_2$, and $2Fe + O_2 = 2FeO$ show that 1 mole of $CO_2$ or $H_2O$ can oxidize 1 mole of Fe, whereas 1 mole of $O_2$ can oxidize 2 moles of Fe).

The atmosphere temperature and gas oxidation degree in the alkali-removal zone 42 can be adjusted by changing, for example, the air-fuel ratio of the primary burner 7 and blowing of hydrocarbon gas onto the hearth 5 (for example, refer to Japanese Unexamined Patent Application Publication No. 11-217615).

The residence time of the reduced briquettes D should be adjusted such that the alkali metal element content in alkali-removed reduced briquettes (alkali-removed reduced agglomerates) E having been passed through the alkali-removal zone 42 is equal to or lower than the allowable value.

[Strength-development zone]

The alkali-removed reduced briquettes E from which alkali metal elements have been removed by passing through the alkali-removal zone 42 as described above are transported with the movement of the hearth 5 to the strength-development zone 43 and continuously heated in an oxidizing atmosphere.

As the atmosphere temperature, a temperature at which wustite generated by reoxidation melts and metallic iron does not melt (in this example, 1250°C to 1350°C, which is the same as the maximum temperature of the reduction zone and the atmosphere temperature of the alkali-removal zone 42) should be selected.

The atmosphere is made to be an oxidizing atmosphere for making reoxidation of metallic iron to proceed to generate wustite. The atmosphere is made to have a gas oxidation degree OD of 1.0 or more, preferably 1.05 or more, more preferably 1.1 or more. When the gas oxidation degree OD is made excessively high, reoxidation of metallic iron excessively proceeds, resulting in a considerable decrease in the iron metallization ratio. Accordingly, the gas oxidation degree OD should be made 1.3 or less, preferably 1.25 or less, more preferably 1.2 or less.

The residence time of the alkali-removed reduced briquettes E should be adjusted such that a reduced iron product F having been passed through the strength-development zone 43 has a crushing strength of equal to or more than the target value.

Thus, the reduced iron product F from which alkali metal elements have been substantially removed and which has enhanced crushing strength can be produced.

Note that the allowable content of alkali metal elements and the necessary crushing strength vary depending on the requirements of those who use the finally obtained reduced iron product F. Accordingly, the residence times of briquettes in the reduction zone 41, the alkali-removal zone 42, and the strength-development zone 43 need to be adjusted. The residence time of briquettes in the reduction zone 41 can be freely adjusted by changing the moving speed of the hearth 5. In contrast, to adjust the residence times of briquettes in the alkali-removal zone 42 and the strength-development zone 43, the ratio of the lengths of the zones 42 and 43 with respect to the length of the reduction zone 41 should be set in advance.

The ratio of the lengths of the reduction zone 41, the alkali-removal zone 42, and the strength-development zone 43 is preferably 1:[0.1 to 0.5]:[0.1 to 0.5].

The preferred upper limits of the lengths of the alkali-removal zone 42 and the strength-development zone 43 in the ratio with respect to the length of the reduction zone 41 are set at 0.5. This is because the laboratory-test results in Figs. 3 and 4 show that substantial completion of reduction of iron oxide requires a heating time for 6 min, whereas achievement of sufficient removal of alkali metal elements (removal percentage of 60% or more) requires a heating time for 3 min and achievement of maximum crushing strength also requires a heating time for 3 min. When the lengths of the alkali-removal zone 42 and the strength-development zone 43 are increased beyond the upper limits, the productivity of the reduced iron product F is degraded and the crushing strength decreases.

On the other hand, the preferred lower limits of the lengths of the alkali-removal zone 42 and the strength-development zone 43 in the ratio with respect to the length of the reduction zone 41 are set at 0.1. This is because, in the case of less than 0.1, alkali metal elements are not sufficiently removed and the crushing strength becomes insufficient.

(Embodiment 2)

The Embodiment 1 above describes an example in which the slag component composition and carbon content of the carbon composite briquettes C are not particularly limited. By making such component compositions be in predetermined ranges, a reduced iron product that is more suitable as an iron material for a blast furnace, an electric furnace, a converter, or the like, has a sufficiently high carbon content, and has an increased crushing strength can be obtained.

Specifically, the following carbon composite briquettes C are preferably used. In the carbon composite briquettes C, the total content of $SiO_2$ $Al_2O_3$, CaO, and MgO is 7 to 15 mass%; the MgO content is 0.1 to 6 mass%; the mass ratio of $Al_2O_3/SiO_2$ is 0.34 to 0.52; and the mass ratio of $CaO/SiO_2$ is 0.25 to 2.0 (more preferably 0.25 to 1.5, particularly preferably 0.25 to 1.0). In addition, the C content of the carbon composite briquettes C is adjusted such that 1 to 9 mass% of C remains in the reduced iron product F obtained by reducing the carbon composite briquettes C.

Hereinafter, reasons for the numerical limitations on such parameters will be described.

<In carbon composite briquettes, total content of $SiO_2$, $Al_2O_3$, CaO, and MgO: 7 to 15 mass%>

The total content of $SiO_2$, $Al_2O_3$, CaO, and MgO in the carbon composite briquettes C substantially equals to the slag component content of the carbon composite briquettes C. When the slag component content of the carbon composite briquettes C is excessively low, a strength-development action for the reduced iron product F described below is not sufficiently exhibited. When the slag component content of the carbon composite briquettes C is excessively high, the reduced iron product F obtained by reducing the carbon composite briquettes C has an excessively high slag content and has a low iron grade. The total content of $SiO_2$, $Al_2O_3$, CaO, and MgO in the carbon composite briquettes C is preferably in the range of 7 to 15 mass%.

Note that all the carbon composite briquettes C used in heating reduction tests described below had a total content of $SiO_2$, $Al_2O_3$, CaO, and MgO in the range of 7 to 15 mass%.

<MgO content: 0.1 to 6 mass%>

When the MgO content increases, the melting point of slag increases and the amount of slag melted decreases and hence the strength-development action for the reduced iron product F described below is not sufficiently exhibited. Accordingly, the upper limit of the MgO content is defined as 6 mass%. On the other hand, since ironmaking dust unavoidably contains the MgO component, the lower limit of the MgO content is defined as 0.1 mass%.

Note that all the carbon composite briquettes C used in the heating reduction tests described below had a MgO content in the range of 0.1 to 6 mass%.

<Mass ratio of $Al2O_3/SiO_2$: 0.34 to 0.52; and mass ratio of $CaO/SiO_2$: 0.25 to 2.0 (more preferably 0.25 to 1.5, particularly preferably 0.25 to 1.0)>

The inventors of the present invention first investigated the influence of the slag component composition on the crushing strength of the reduced iron product. The inventors prepared carbon composite briquettes having various slag component compositions from ironmaking dusts including blast-furnace dust and iron ore, performed heating reduction tests in an atmosphere ($N_2$ = 100%) with the same test apparatus as in the laboratory test described in the "Solution to Problem", and measured the crushing strength of reduced iron at the time when reduction of iron oxide has been completed.

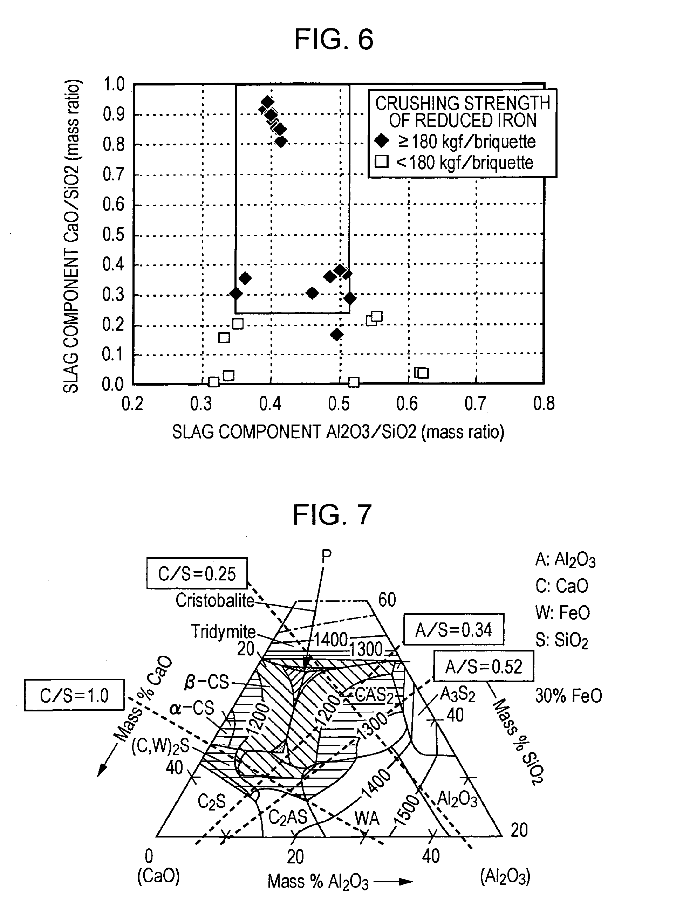

The measurement results are illustrated in Fig. 6. As illustrated in Fig. 6, the inventors have found that, by making the mass ratio of $Al_2O_3/SiO_2$ be in the range of 0.34 to 0.52 and the mass ratio of $CaO/SiO_2$ be in the range of 0.25 to 1.0, the crushing strength of reduced iron is further increased to 180 kgf/briquette (about 1760 N/briquette) or more.

The reason for which the crushing strength of reduced iron is thus increased by making the mass ratios of the slag component of carbon composite briquettes, that is, $CaO/SiO_2$ and $Al_2O_3/SiO_2$ be in the specific ranges is probably as follows.

As illustrated in Fig. 7, when the specific ranges are plotted in the FeO (constant: 30 mass%)-CaO-$Al_2O_3$-$SiO_2$ phase diagram, the specific ranges are found to correspond to a region in which the liquidus temperature is a relatively low temperature of about 1200°C to 1300°C. Accordingly, the slag component (CaO, $Al_2O_3$, and $SiO_2$) reacts with wustite (FeO) to have lower melting points; a portion of the reaction products melts to provide a solid-liquid coexistent state; and sintering of metallic iron is promoted.

As is clear from Fig. 7, the specific ranges correspond to a region that does not include the eutectic point P, which is a minimum melting point, and is located slightly away from the eutectic point P toward a high-temperature side.

The reason for this is probably as follows. When the slag component of the carbon composite briquettes C is made to have a composition close to the eutectic point P in Fig. 7, the slag component reacts with wustite (FeO) and the entire amount of the slag component rapidly melts. Such rapid melting of the entire amount of the slag component results in the formation of a large number of cavities in the briquettes, which inhibits promotion of sintering of metallic iron. Thus, high strength is not achieved. In contrast, by making the slag component of the carbon composite briquettes C be in the specific ranges in Fig. 7, a solid-liquid coexistent state in which not the entire amount of but a portion of the slag component melts is achieved; as a result, the formation of cavities due to melting of slag is suppressed and sintering of metallic iron can be promoted. In summary, the strength development of reduced iron is achieved not by a slag phase but by the sinter structure of metallic iron.

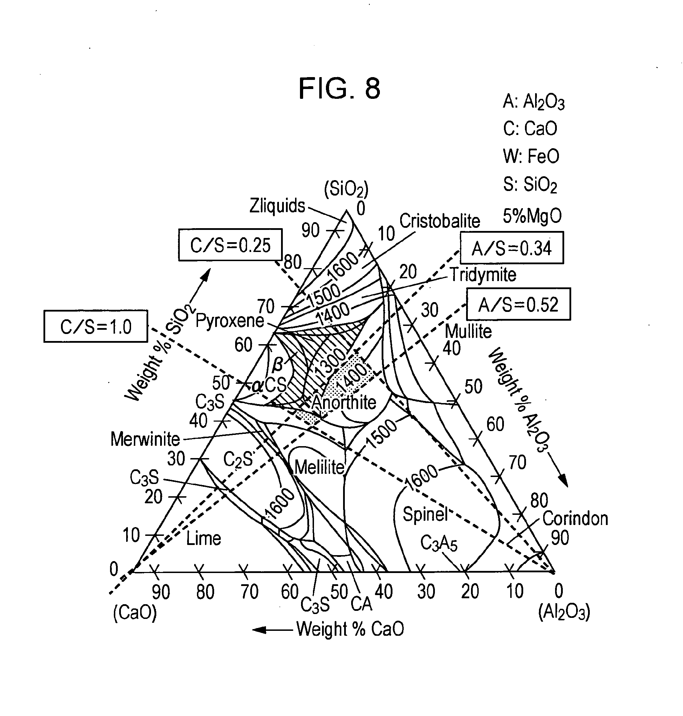

As illustrated in Fig. 8, when the specific ranges are plotted in the MgO (constant: 5 mass%)-CaO-$Al_2O_3$-$SiO_2$ phase diagram, the specific ranges are found to correspond to a region in which the liquidus temperature is about 1300°C to 1400°C. This liquidus temperature is about 100°C higher than that in the case in Fig. 7 where FeO is present. This shows that the presence of wustite (FeO) is necessary to facilitate melting of the slag component.

From the test results, $CaO/SiO_2$ of the carbon composite briquettes C is particularly preferably in the range of 0.25 to 1.0. However, even when an excessive amount of CaO is present in the carbon composite briquettes C, a portion of CaO melts and $CaO/SiO_2$ of molten slag can satisfy the range of 0.25 to 1.0. Thus, sintering of metallic iron is promoted by the same action as that described above and the strength of reduced iron is developed. Accordingly, the preferred range of $CaO/SiO_2$ is defined as the range of 0.25 to 2.0 (more preferably 0.25 to 1.5).

The composition of the slag component of the carbon composite briquettes C can be adjusted by, for example, adjusting blending proportions of a plurality of ironmaking dusts having different slag component compositions and iron ore, or adjusting the amount of CaO source added such as limestone or burnt lime.

<Amount of C remaining in reduced iron product obtained by reducing carbon composite briquettes: 1 to 9 mass%>

When the amount of C remaining in the reduced iron product F obtained by reducing the carbon composite briquettes C is excessively small, in the case of using the reduced iron product F as an iron material for a blast furnace, a converter, an electric furnace, or the like, the action of remaining carbon serving as a reductant for reducing unreduced iron oxide (FeO and the like) remaining in the reduced iron product F is insufficient. On the other hand, when the amount of C remaining in the reduced iron product F is excessively large, a large amount of carbon grains remaining in the reduced iron F inhibit bonding between metallic iron grains and hence the strength of the reduced iron F becomes insufficient. The amount of C remaining in the reduced iron product F obtained by reducing the carbon composite briquettes C is preferably in the range of 1 to 9 mass%.

Note that the C contents of all the reduced iron products F obtained by reducing the carbon composite briquettes used in the heating reduction tests described above were in the range of 1 to 9 mass%.

The amount of C remaining in the reduced iron product F can be adjusted by adjusting the C content of the carbon composite briquettes C: for example, in the production of the carbon composite briquettes C, by adjusting the blending proportion of blast-furnace dust having a high carbon content or adjusting the amount of a carbonaceous material added such as coal or coke powder.

The carbon content Xc of the carbon composite briquettes C should be specifically set with the following formula (1).

$$Xc = XcT + XcR \quad \cdots (1)$$

where $XcT = (12/16) \cdot Xo$; XcT represents a theoretical C amount necessary for completely reducing iron oxide and zinc oxide in the carbon composite briquettes C to the metals; XcR represents the amount of C remaining in reduced iron when the iron oxide and zinc oxide have been completely reduced to the metals with the theoretical C amount XcT; and Xo represents the total amount of oxygen of iron oxide and oxygen of zinc oxide in the carbon composite briquettes C.

In the formula (1), in addition to reduction of iron oxide, reduction of zinc oxide is considered. This is because, when ironmaking dust is used as a material, the ironmaking dust contains a relatively large amount of zinc oxide and reduction of the zinc oxide requires a relatively large amount of C. Compared with iron oxide and zinc oxide, the contents of oxides of other nonferrous metals such as lead and alkali metals are low and hence these oxides are not considered.

The theoretical C amount is defined on the premise that reduction of 1 mole of oxygen of iron oxide or zinc oxide requires 1 mole of carbon. However, in actual reduction of the carbon composite briquettes C with a moving hearth furnace, CO gas is generated by reduction (direct reduction) of iron oxide or zinc oxide with carbon and the CO gas causes reduction (gas reduction) of iron oxide or zinc oxide to proceed; accordingly, the amount of carbon required for reduction of 1 mole of oxygen of iron oxide or zinc oxide is less than 1 mole. On the other hand, since the carbon composite briquettes C are heated by combustion with burners in a moving hearth furnace, the combustion gas consumes a portion of a carbonaceous material (carbon) in the carbon composite briquettes C and the portion is not used for reduction of iron oxide or zinc oxide. As a result, the decrease in the C consumption due to the gas reduction substantially cancels out the increase in the C consumption due to burner combustion gas. Accordingly, the theoretical C amount can be regarded as a C amount actually required for reduction.

(Embodiment 3)

The Embodiments 1 and 2 above describe examples in which the physical internal structure of the carbon composite briquettes C is not particularly limited. As for the physical internal structure of the carbon composite briquettes C, in particular, by making the porosity of the carbon composite briquettes C be in a specific range, even when the amount of carbon remaining in the reduced iron product F obtained by reducing the carbon composite briquettes C is large, a sufficiently high crushing strength can be achieved with certainty.

Specifically, carbon composite briquettes C having a porosity of 37.5% or less are preferably used.

Hereinafter, the reason for which the porosity of the carbon composite briquettes C is limited to 37.5% or less will be described.

The inventors of the present invention investigated the influence of various parameters on the crushing strength of the reduced iron F obtained by preparing carbon composite briquettes from ironmaking dust and reducing the carbon composite briquettes under the same test conditions as in Embodiment 2.

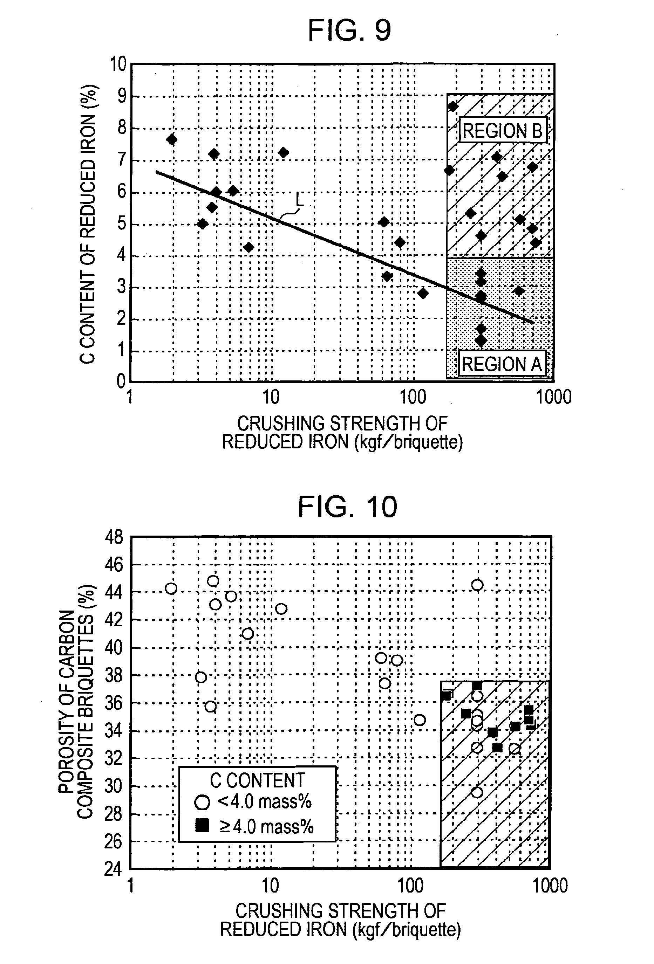

Fig. 9 illustrates the relationship between the C content of reduced iron and the crushing strength of reduced iron. As illustrated in Fig. 9, it has been found that reduced irons having a crushing strength of 180 kgf/briquette (about 1760 N/briquette) or more, which are more suitable as iron materials for a blast furnace and the like, are a reduced iron [region A] having a low C content (C: 1 mass% or more and less than 4 mass%) and a reduced iron [region B] having a high C content (C: 4 mass% or more). Herein, the reduced iron in the region A is an extension of common general technical knowledge (line L in the figure) in which the higher the C content of reduced iron, the lower the crushing strength of the reduced iron becomes. In contrast, the reduced iron in the region B is irrelevant to the common general technical knowledge and a high crushing strength is achieved in spite of a high C content.

The inventors studied the reason why a high crushing strength is achieved in spite of a high C content and, as a result, have found that the porosity of carbon composite briquettes to be reduced influences the crushing strength.

Fig. 10 illustrates the relationship between the porosity of carbon composite briquettes and the crushing strength of reduced iron. As illustrated in Fig. 10, there is a very strong correlation between the porosity of carbon composite briquettes and the crushing strength of reduced iron regardless of the C content of reduced iron.

Accordingly, as illustrated in Fig. 10, by controlling the porosity of carbon composite briquettes to be 37.5% or less, reduced iron having a high crushing strength of 180 kgf/briquette (about 1760 N/briquette) or more can be produced with certainty regardless of the C content.

By making the porosity of carbon composite briquettes be the predetermined value or less, the distance between iron oxide grains in the carbon composite briquettes becomes short and bonding of metallic iron grains (sintering of metallic iron) after reduction is promoted, which probably results in a further increase in the strength of reduced iron.

When the porosity of carbon composite briquettes is made excessively low, bursting tends to occur during reduction. Accordingly, the lower limit of the porosity is preferably 25%.

The porosity of carbon composite briquettes is calculated from the apparent density and true density of carbon composite briquettes:

$$\texttt{Porosity (\%) = (1 - [apparent density]/[true density])} \times \texttt{100}$$

where the apparent density of carbon composite briquettes represents the measurement value of the apparent density of dry briquettes; and the true density of carbon composite briquettes represents a weighted average value of true densities of individual materials forming carbon composite briquettes in terms of blending proportions.

Since ironmaking dust has a very small grain size, it may be difficult to compact ironmaking dust. Depending on the type or blending proportion of ironmaking dust used, there are cases where it is difficult to make the porosity of carbon composite briquettes be 37.5% or less by standard forming techniques. In such cases, for example, the following technique may be employed (refer to Japanese Unexamined Patent Application Publication No. 2009-7667): under size after compaction with a briquetting machine is mixed as a recycled material with a new material and returned to the briquetting machine to compact the material to thereby increase the apparent density (that is, decrease the porosity) of carbon composite briquettes.

(Embodiment 4)

The Embodiments 1 to 3 above describe examples in which the grain size of a carbonaceous material contained in the carbon composite briquettes C is not particularly limited. By making the grain size of such a carbonaceous material be in a specific range, the crushing strength of the reduced iron product F obtained by reducing the carbon composite briquettes C is ensured and the amount of carbon remaining in the reduced iron F can be further increased.

Specifically, the average grain size d50 of a carbonaceous material in the carbon composite briquettes C measured by a laser diffraction scattering grain size distribution measurement method is preferably made 30 $\mu$m or less (more preferably, 10 $\mu$m or less).

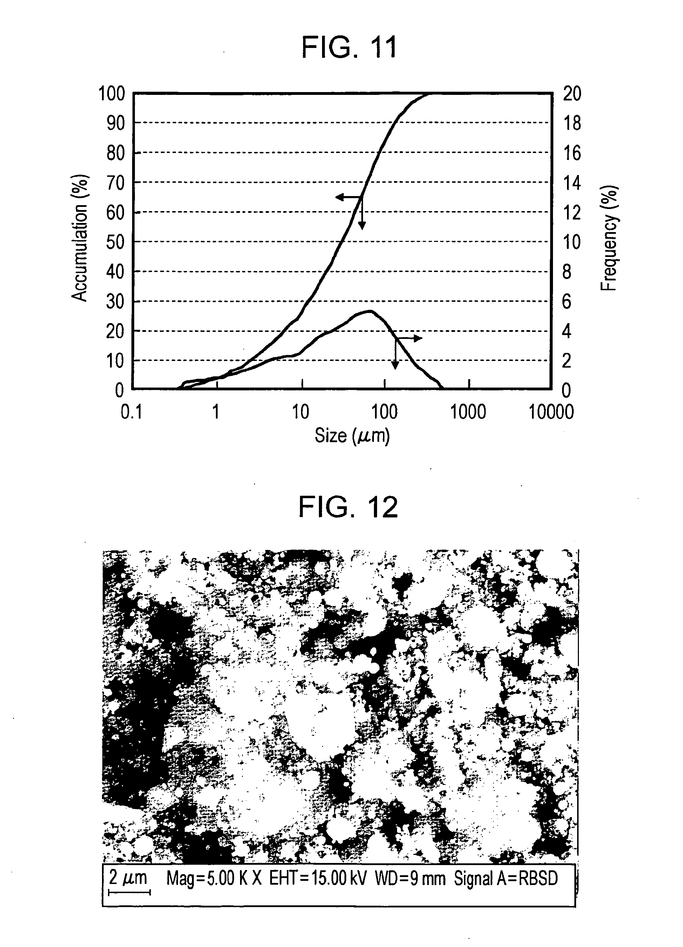

For example, blast-furnace wet dust containing a large amount of carbon grains derived from coke powder or pulverized coal is used as ironmaking dust and the carbon grains of the blast-furnace wet dust are used as a carbonaceous material to prepare carbon composite briquettes. As for reduced iron obtained by reducing such carbon composite briquettes, it is known that the amount of carbon remaining in the reduced iron can be made high while the crushing strength is ensured. The grain size distribution of the blast-furnace wet dust was measured by a laser diffraction scattering grain size distribution measurement method and the grain size distribution illustrated in Fig. 11 was obtained. Fig. 12 illustrates the blast-furnace wet dust observed with a scanning electron microscope. In Fig. 12, large angular grains are identified as iron oxide; spherical grains are identified as $CaO-SiO_2-FeO$ slag; as for carbon, which is a light element, carbon grains cannot be identified; however, grains other than the large iron oxide grains are fine grains and hence carbon grains are probably fine grains. In summary, it is clear that the grain size of carbon grains is at least equal to or less than the grain size of the entirety of the blast-furnace wet dust (the average grain size d50 is 30 $\mu$m) in Fig. 11; and, from the observation result with a scanning electron microscope in Fig. 12, the grain size of carbon grains is probably 10 $\mu$m or less in terms of average grain size d50.

Accordingly, the average grain size d50 of a carbonaceous material in the carbon composite briquettes C measured by a laser diffraction scattering grain size distribution measurement method is preferably 30 $\mu$m or less, more preferably 10 $\mu$m or less.

The average grain size d50 of a carbonaceous material in the carbon composite briquettes C may be adjusted, for example, in the following manner. When blast-furnace wet dust is used as a portion of materials, the blending proportion of the dust is adjusted. When coal powder or coke powder is added as a carbonaceous material, the pulverization grain size of such a powder is adjusted.

(Modification)

In the above-described embodiments, as an example of the agglomerate form of carbon composite agglomerates, briquettes are described. Alternatively, pellets may be employed.

In the above-described embodiments, as an example of the furnace type of a moving hearth furnace, a rotary hearth furnace is described. Alternatively, a straight hearth furnace may be employed.

While the present invention has been described in detail and with reference to specific embodiments thereof, it will be apparent to one skilled in the art that various changes and modifications can be made therein without departing from the spirit and scope thereof.

This application is based on Japanese Patent Application No. 2009-169718 filed on July 21, 2009, the entire contents thereof being hereby incorporated by reference.

Industrial Applicability

The present invention is advantageous as a technique of producing reduced iron from ironmaking dust in ironmaking equipment.

Reference Signs List

1 mixer
2 twin-roll briquetting machine
3 dryer
4 moving hearth furnace (rotary hearth furnace)
41 reduction zone

41a to 41e subzones
42 alkali-removal zone
43 strength-development zone
5 hearth
6 partition wall
7 primary burner
8 secondary combustion burner
A ironmaking dust containing alkali metal elements (alkali-containing ironmaking dust)
B blend material
C carbon composite agglomerates (carbon composite briquettes)
C' charged briquettes
D reduced agglomerates (reduced briquettes)
E alkali-removed reduced agglomerates (alkali-removed reduced briquettes)
F reduced iron product

**Claims**

1. An apparatus for producing reduced iron by reducing carbon composite agglomerates at least containing ironmaking dust containing an alkali metal element through heating with a moving hearth furnace,
   wherein the moving hearth furnace includes
   a reduction zone configured to reduce the carbon composite agglomerates through heating to form reduced agglomerates having an iron metallization ratio of 80% or more,
   an alkali-removal zone that is provided downstream of the reduction zone and configured to heat the reduced agglomerates in a reducing atmosphere so that the alkali metal element is removed from the reduced agglomerates to form alkali-removed reduced agglomerates, and
   a strength-development zone that is provided downstream of the alkali-removal zone and configured to heat the alkali-removed reduced agglomerates in an oxidizing atmosphere to increase a crushing strength of the alkali-removed reduced agglomerates to form a reduced iron product.

2. The apparatus for producing reduced iron according to Claim 1, wherein the reducing atmosphere of the alkali-removal zone has a gas oxidation degree OD of less than 1.0 and the oxidizing atmosphere of the strength-development zone has a gas oxidation degree OD of 1.0 or more, and

$$OD = (CO_2 + H_2O + 2O_2)/(CO_2 + H_2O + O_2 + CO + H_2)$$

[where a unit of $CO_2$, $H_2O$, $O_2$, $CO$, and $H_2$ is vol%].

3. The apparatus for producing reduced iron according to Claim 1 or 2, wherein a ratio of lengths of the reduction zone, the alkali-removal zone, and the strength-development zone is 1:[0.1 to 0.5]:[0.1 to 0.5].

4. A method for producing reduced iron, using the apparatus for producing reduced iron according to any one of Claims 1 to 3 to produce a reduced iron product from carbon composite agglomerates at least containing ironmaking dust containing an alkali metal element.

5. The method for producing reduced iron according to Claim 4, wherein, in the carbon composite agglomerates, a total content of $SiO_2$, $Al_2O_3$, CaO, and MgO is 7 to 15 mass%, a MgO content is 0.1 to 6 mass%, a mass ratio of $Al_2O_3/SiO_2$ is 0.34 to 0.52, and a mass ratio of $CaO/SiO_2$ is 0.25 to 2.0; and a C content of the carbon composite agglomerates is adjusted such that 1 to 9 mass% of C remains in the reduced iron product obtained by reducing the carbon composite agglomerates.

6. The method for producing reduced iron according to Claim 4 or 5, wherein the carbon composite agglomerates have a porosity of 37.5% or less.

7. The method for producing reduced iron according to any one of Claims 4 to 6, wherein an average grain size d50 of a carbonaceous material in the carbon composite agglomerates measured by a laser diffraction scattering grain size distribution measurement method is 30 $\mu$m or less.

# FIG. 1

ANOTHER STEELMAKING DUST ETC.

FIG. 2

## FIG. 3

# FIG. 4

# FIG. 5

(a)  BRIQUETTE
SURFACE

100 μm

(b)

– – BRIQUETTE
SURFACE

WUSTITE
GRAINS

100 μm

# FIG. 6

CRUSHING STRENGTH
OF REDUCED IRON
◆ ≥ 180 kgf/briquette
□ < 180 kgf/briquette

SLAG COMPONENT CaO/SiO2 (mass ratio)

SLAG COMPONENT Al2O3/SiO2 (mass ratio)

# FIG. 7

C/S=0.25

Cristobalite

Tridymite

C/S=1.0

β-CS

α-CS

(C,W)₂S

C₂S

C₂AS

WA

P

A/S=0.34

A/S=0.52

A: Al₂O₃
C: CaO
W: FeO
S: SiO₂

30% FeO

A₃S₂

Al₂O₃

Mass % SiO₂

Mass % CaO

Mass % Al₂O₃ ⟶

0
(CaO)

(Al₂O₃)

# FIG. 8

A: Al₂O₃
C: CaO
W: FeO
S: SiO₂
5%MgO

## FIG. 9

CRUSHING STRENGTH OF
REDUCED IRON (kgf/briquette)

## FIG. 10

CRUSHING STRENGTH OF
REDUCED IRON (kgf/briquette)

## FIG. 11

## FIG. 12

2 μm   Mag=5.00 K X   EHT=15.00 kV   WD=9 mm   Signal A=RBSD

EP 2 458 021 A1

**INTERNATIONAL SEARCH REPORT**

| International application No. |
| PCT/JP2010/062256 |

A.    CLASSIFICATION OF SUBJECT MATTER
*C21B13/10*(2006.01)i, *C22B1/16*(2006.01)i

According to International Patent Classification (IPC) or to both national classification and IPC

B.    FIELDS SEARCHED

Minimum documentation searched (classification system followed by classification symbols)
C21B13/10, C22B1/16-1/18

Documentation searched other than minimum documentation to the extent that such documents are included in the fields searched
Jitsuyo Shinan Koho        1922-1996   Jitsuyo Shinan Toroku Koho   1996-2010
Kokai Jitsuyo Shinan Koho  1971-2010   Toroku Jitsuyo Shinan Koho   1994-2010

Electronic data base consulted during the international search (name of data base and, where practicable, search terms used)

C.    DOCUMENTS CONSIDERED TO BE RELEVANT

| Category* | Citation of document, with indication, where appropriate, of the relevant passages | Relevant to claim No. |
|---|---|---|
| A | JP 11-310832 A  (LTV Steel Co., Inc.), 09 November 1999 (09.11.1999), claim 1; examples & US 6120577 A1          & EP 976843 A1 & CA 2261173 A | 1-7 |
| A | JP 2002-97508 A  (Mitsubishi Heavy Industries, Ltd.), 02 April 2002 (02.04.2002), paragraphs [0049], [0053] (Family: none) | 1-7 |
| A | US 3836353 A  (Carl A.Holley), 17 September 1974 (17.09.1974), entire text (Family: none) | 1-7 |

☒  Further documents are listed in the continuation of Box C.      ☐  See patent family annex.

| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| 08 October, 2010 (08.10.10) | 19 October, 2010 (19.10.10) |

| Name and mailing address of the ISA/ | Authorized officer |
| Japanese Patent Office | |
| Facsimile No. | Telephone No. |

Form PCT/ISA/210 (second sheet) (July 2009)

23

**EP 2 458 021 A1**

| | **INTERNATIONAL SEARCH REPORT** | International application No. |
|---|---|---|
| | | PCT/JP2010/062256 |

C (Continuation).   DOCUMENTS CONSIDERED TO BE RELEVANT

| Category* | Citation of document, with indication, where appropriate, of the relevant passages | Relevant to claim No. |
|---|---|---|
| A | WO 2009/035053 A1  (Nippon Steel Corp.),<br>19 March 2009 (19.03.2009),<br>claims 1 to 6<br>& EP 21189547 A1       & KR 2010/0043095 A | 1-7 |
| A | JP 2008-56986 A  (Hamada Heavy Industries Ltd.),<br>13 March 2008 (13.03.2008),<br>claim 1<br>(Family: none) | 1-7 |
| A | JP 2000-34526 A  (Nippon Steel Corp.),<br>02 February 2000 (02.02.2000),<br>claim 1<br>(Family: none) | 1-7 |
| A | JP 2006-283136 A  (Nippon Steel Corp.),<br>19 October 2006 (19.10.2006),<br>examples<br>(Family: none) | 1-7 |

Form PCT/ISA/210 (continuation of second sheet) (July 2009)

24

**EP 2 458 021 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2003293019 A
- JP 2003293020 A
- JP 2009052141 A
- JP 2003129142 A

- JP 2004256868 A
- JP 11217615 A
- JP 2009007667 A
- JP 2009169718 A